# EUROPÄISCHE PATENTANMELDUNG

(11) **EP 1 371 653 A1**
(43) Veröffentlichungstag der Anmeldung: **17.12.2003**
(21) Anmeldenummer: 03011757.6
(22) Anmeldetag: 23.05.2003
(51) Int. Cl.: C07F 5/06

(54) **Verfahren zur Herstellung von Alkalitetraalkylaluminaten und deren Verwendung**

(30) Priorität: 13.06.2002 DE 10226360
(71) Anmelder: Crompton GmbH, 59192 Bergkamen (DE)
(72) Erfinder: Hüttenhofer, Mario, Dr., 78462 Konstanz (DE); Heitmann, Peter, Dr., 58730 Fröndenberg (DE); Wanke, Thomas, 59368 Werne (DE)
(74) Vertreter: Wibbelmann, Jobst, Dr., Dipl.-Chem.

(57) **Zusammenfassung**

Die vorliegende Erfindung betrifft ein Verfahren zur Herstellung von Alkalitetraalkylaluminaten, insbesondere von Kaliumtetraethylaluminat, wie auch die Verwendung eines solchen Aluminat-Komplexes bei der galvanisch-elektrolytischen Aluminiumabscheidung.

## Beschreibung

Bei der vorliegenden Erfindung handelt es sich um ein Verfahren zur Herstellung von Alkalitetraalkylaluminaten, insbesondere von Kaliumtetraethylaluminat, wie auch die Verwendung eines solchen Aluminat-Komplexes bei der galvanischelektrolytischen Aluminiumabscheidung.

Alkalitetraalkylaluminate finden Verwendung bei der Aluminierung von unedlen Metallen. Die auf dem unedlen Metall elektrolytisch abgeschiedene Aluminiumschicht schützt dieses vor Korrosion, außerdem hat die Aluminiumschicht zum Teil dekorativen Charakter.
Die Aluminierung ist grundsätzlich nach verschiedenen Methoden möglich. Beispielsweise kann Aluminium durch Schmelzflusselektrolyse oder aus Lösungen elektrolytisch auf einem Substrat abgeschieden werden.
Bei der Abscheidung aus einer Lösung muss berücksichtigt werden, dass Aluminium selbst sehr unedel ist und nur durch eine oberflächlich festanhaftende Oxidschicht vor weiterer Oxidation geschützt wird. Daher muss in wasserfreien Medien in organischen Lösungsmitteln gearbeitet werden. Als Aluminiumverbindungen, die sich zur Aluminierung eignen, finden Trialkylaluminiumverbindungen, insbesondere aber die komplexen Tetraalkylaluminate Verwendung, die als Salze in den organischen Lösungsmitteln außerdem die notwendige Stromdichte für eine schnelle und gleichmäßige Elektrolytabscheidung ermöglichen.

Die Verwendung von Kaliumtetraethylaluminat hat sich als besonders vorteilhaft herausgestellt, da neben guter kommerzieller Zugänglichkeit auch die vorstehend beschriebenen Bedingungen der notwendigen Stromdichten für eine schnelle und gleichmäßige Elektrolytabscheidung erreicht werden können.

In der Literatur bekannte Verfahren zur Herstellung von Natriumtetraethylaluminat gehen von Triethylaluminium aus, das mit flüssigem Natrium, Natrium-tertbutanolat oder anderen Natriumalkanolaten umgesetzt wird. Ausserdem kann aus Ethen und einem Triethylaluminium-Natriumhydrid-Komplex das Natriumtetraethylaluminat gewonnen werden (Houben-Weyl, Methoden der organischen Chemie, Tübingen 1970, Metallorganische Verbindungen Bd. XIII/4, Seiten 123-135; Liebigs Ann. Chem. 705 (1967) S. 43).

Zu den in der Literatur bekannten Verfahren zur Herstellung von Kaliumtetraethylaluminat gehören die Umsetzung von Triethylaluminium mit Kaliumtert-butanolat sowie eine Umsetzung von Natriumtetraethylaluminat mit Kaliumchlorid oder mit Kaliumamalgam (Houben-Weyl, Methoden der organischen Chemie, Tübingen 1970, Metallorganische Verbindungen Bd. XIII/4, Seiten 123-135; Liebigs Ann. Chem. 705 (1967) S. 43) analog der Umsetzungen für das Natriumtetraethylaluminat.

Die Herstellungsverfahren nach dem Stand der Technik weisen einige Nachteile auf.

Die direkte Herstellung des Kalium-Salzes weist das Problem auf, dass das Produkt schwierig zu isolieren ist und eine starke Färbung aufweist.

Alle Herstellungswege über Amalgame (Na/Hg bzw. K/Hg) sind schon aus toxikologischen Gründen bedenklich.

Die Herstellungswege für NaAlEt₄ über elementares flüssiges Natrium weisen ebenfalls durch die Verwendung von pyrophorem flüssigem Natrium verfahrenstechnische Probleme auf.

Die Anlagerung von Ethen an NaH^{*}TEA ist in seiner Reaktionsführung sehr problematisch, da nur in einem engen Temperaturfenster das "Durchgehen" der Reaktion verhindert werden kann. Außerdem ist die Herstellung verfahrenstechnisch durch das Handling von gasförmigen Reaktanden sowie der Abtrennung von zurückbleibendem NaH^{*}TEA aufwendiger.

Die Herstellung von KAlEt₄ ausgehen von KOtBu + TEA birgt ebenfalls Probleme:
Die Reaktion erfolgt bei hohen Temperaturen, und KAlEt₄ fällt nicht als Feststoff an (aufgrund seiner guten Löslichkeit in Kohlenwasserstoffen und durch Bildung von Assoziaten), deshalb ist eine aufwendige Phasentrennung nötig. Als Prozesslösemittel werden hochsiedende Paraffine verwendet. Die Reinheit ist tendenziell schlecht.

So zeigt auch die US 3,285,947 die Probleme zur Darstellung reinen KAlEt₄ auf, schlägt als Lösung jedoch den Weg über Kaliumamalgam vor.

Auch die WO 00/32847 (=EP 1141 447) beschreibt die Verwendung von Natriumund/oder Kaliumtetraethylaluminat als Bestandteile eines elektrolytischen Systems zur galvanischen Abscheidung von Aluminium oder Magnesium auf unterschiedlichen Substraten. Dort wird allerdings die Darstellung des Natriumtetraethylaluminats nicht erwähnt und die Darstellung des Klaiumtetraethylaluminats bei hoher Temperatur beschrieben.

Als Elektrolyt werden zumeist Komplexe aus Natriumfluorid und Triethylaluminium in Toluol oder Xylol eingesetzt. Diese sind jedoch wegen ihrer Nachteile der ungleichmäßigen Beschichtung, insbesondere bei kantigen, eckigen Substraten inzwischen überholt.

Aufgabe der vorliegenden Erfindung ist ein einfaches und effizientes Verfahren zur Herstellung von Alkalitetraalkylaluminaten, insbesondere von Kaliumtetraalkylaluminaten.

Diese Aufgabe wird durch ein Verfahren gemäß Anspruch 1 gelöst.

Gegenstand der Erfindung ist ein Verfahren zur Herstellung von Alkalitetraalkylaluminat, dadurch gekennzeichnet, dass zu einer Lösung von Alkaliethanolat in Kohlenwasserstoff Trialkylaluminium zudosiert wird, wobei Alkalitetraalkylaluminat gebildet wird.

Ein Vorteil des erfindungsgemäßen Verfahrens liegt darin, dass durch die Zudosierung von Trialkylaluminium zu einer Lösung von Alkaliethanolat in Kohlenwasserstoff die Reaktion gut gesteuert werden kann, was insbesondere bei der Wahl von Natriumethanolat (im Gegensatz zu anderen Alkoholaten) bei der Herstellung des Natriumtetraethylaluminats mehrere Vorteile mit sich bringt:
1. gute kommerzielle Verfügbarkeit, einfache Herstellbarkeit im Vergleich zu Na-Butanolat
2. Gewinnung eines weiteren kommerziell verwertbaren Produktes Diethylethoxyaluminium (DEALOX).

Weiterhin ist Gegenstand der Erfindung ein Verfahren zur Herstellung von Alkalitetraalkylaluminaten, dadurch gekennzeichnet, dass das in einem ersten, vorstehend beschriebenem Verfahrensschritt gebildete Alkalitetraalkylaluminat in einem weiteren Verfahrensschritt mit einem Alkalihalogenid zu einem kationausgetauschten Alkalitetraalkylaluminat umgesetzt wird.

Das bevorzugte erfindungsgemäße Verfahren mit dem zusätzlichem Schritt der Umsalzung wird im folgenden am Beispiel der Herstellung von Kaliumtetraethylaluminat geschildert, was allerdings nicht als eine Einschränkung der beanspruchten Verfahren und deren Verfahrensschritte zu verstehen ist.

Gemäß einer bevorzugten Ausführungsform wird Natriumethanolat mit Triethylaluminium zu Natriumtetraethylaluminat und Diethylethoxyaluminium (DEALOX) umgesetzt. Dabei wird NaOEt in Kohlenwasserstoffen vorgelegt und Triethylaluminium zudosiert. Als Kohlenwasserstoffe eignen sich insbesondere Heptan und Toluol sowie deren Mischungen. Die Isolierung der Produkte erfolgt dabei wahlweise durch Dekantieren oder Filtrieren. Als verwertbares Nebenprodukt wird DEALOX erhalten. Dies kann prinzipiell durch Destillation gereinigt bzw. als KW-Lösung gewonnen werden.

In einem zusätzlichem Schritt kann nach Isolierung des Natriumtetraethylaluminat-Zwischenproduktes die Umsalzung mit KCI zum Kaliumtetraethylaluminat in Toluol erfolgen.
Anschliessend kann eine Herstellung einer Formulierung für die galvanischelektrolytische Aluminiumabscheidung durch Zugabe von Toluol und Triethylaluminium in variierenden Mengen vorgenommen werden. Der Schritt der Umsalzung und der Formulierungsherstellung können auch kombiniert durchgeführt werden.

Die erfindungsgemäße Herstellung von Kaliumtetraethylaluminat via Natriumtetraethylaluminat über einen Umsalzungsprozess weist im Vergleich zu bekannten Verfahren einige Vorteile auf:
1. Einfaches Verfahren (keine aufwendige Trocknung, keine Flüssig-Flüssig-Phasen-Trennung)
2. Tandem-Produktion von Diethylethoxyaluminium (DEALOX)
3. Gute Reaktionskontrolle (im Gegensatz zu NaH^{*}TEA+Ethen) durch Vorlage von NaOEt und Zudosierung von Triethylaluminium
4. Hohe Reinheit verbunden mit sehr guter Ausbeute (hohe Ausbeute/Vermeidung von Anbackungen, insbesondere bei Verwendung von Toluol/Heptan bzw. Heptan allein als Prozesslösemittel)
5. beliebige Einstellbarkeit des Verhältnisses zwischen NaAlEt₄ und KAIEt₄ (5-95%) (wichtig für Herstellung von Elektrolyten)
6. Verwendung von preiswerten, nicht-toxischen Einsatzstoffen wie NaOEt und KCI.

Als Alkalikationen können Natrium, Kalium und Rubidium verwendet werden, wobei das im ersten Verfahrensschritt gebildete Alkalitetraalkylaluminat bevorzugt Natrium und das im zusätzlichem zweiten Schritt gebildete Alkalitetraalkylaluminat bevorzugt Kalium enthält.

Als Halogenide im Rahmen dieser Erfindung kommen Fluorid und Chlorid und Bromid in Betracht, wobei das Chlorid bevorzugt ist. Die Fluoride können zur Komplexbildung bei bestimmten Aluminiumalkylen neigen.

Als Trialkylaluminiumverbindungen können Trimethylaluminium, Triethylaluminium, Tri-n-propyl- und Tri-i-propylaluminium sowie Tri-n-butyl- oder Tri-secbutylaluminium sowie deren Mischungen eingesetzt werden. Bevorzugt wird Triethylaluminium verwendet.

Im erfindungsgemäßen Verfahren werden als Kohlenstoffe im ersten Verfahrensschritt bevorzugt Heptan, Toluol oder Mischungen davon eingesetzt. Der zusätzliche zweite Schritt wird bevorzugt bei 50-100 °C in einem Kohlenwasserstoff, bevorzugt Toluol oder Xylol, durchgeführt. Die Kohlenwasserstoffe können rein oder in Mischung eingesetzt werden.

Gemäß einer bevorzugten Ausführungform wird Triethylaluminium mit Natriumethanolat unter Bildung von Natriumtetraalkylaluminat umgesetzt, dass anschliessend mit Kaliumchlorid in Kaliumtetraalkylaluminat überführt wird.
Das nach den geschilderten Verfahren gebildete Kaliumtetraalkylaluminat zeichnet sich durch besonders hohe Reinheit aus.

Ein weiterer Gegenstand der Erfindung ist die Verwendung von nach dem erfindungsgemäßen Verfahren hergestellten Kaliumtetraalkylaluminat zur galvanischen Aluminium- oder Magnesiumabscheidung auf metallischen Substraten. Kaliumtetraalkylaluminat kann dabei in Form einer Formulierung mit Toluol und Trialkylaluminium eingesetzt werden. Bevorzugt wird Kaliumtetraethylaluminat und Triethylaluminium eingesetzt.

Im folgenden wird die Erfindung anhand von Beispielen näher erläutert, ohne sie jedoch darauf zu beschränken.

### Beispiele

### Synthese NaAlEt₄ (1.Stufe)

### Durchführung:

In einem Reaktionsgefäß werden unter Stickstoffschutzgasatmosphäre 10,00 kg NaOEt, 22,1 kg Heptan und 9,5 kg Toluol vorgelegt. Aufheizen auf Innentemperatur von 70°C unter guter Durchmischung (Suspendierung). Dosierung von 35,23 kg Triethylaluminium (TEA). Es wird 1 h bei 70°C nachgerührt. Innerhalb einer weiteren Stunde wird auf Raumtemperatur abgekühlt. Der Rührer wird abgeschaltet und Phasentrennung abgewartet. Zur Phasentrennung wird abdekantiert.

Nach der ersten Abtrennung der flüssigen Phase wird der Reaktorinhalt mehrfach mit 26,5 kg Hexan resuspendiert und nach Absetzen des Feststoffs die Klarphase dekantiert.

Die Trocknung der Suspension erfolgt bei im Vakuum bei <100 mbar und unter 40°C.

Achtung: Der Feststoff ist pyrophor!

### Synthese KAlEt₄ (2.Stufe)

### Durchführung

Das in der ersten Stufe gebildete Natriumtetraethylaluminat kann als abgeschiedenes Reaktionsprodukt im Reaktor nach der ersten Stufe verbleiben - damit liegen etwa 22 kg vor - und wird unter Stickstoffschutzgasatmosphäre mit 50 kg Toluen versetzt. Es sollte keine Exothermie auftreten.
In die gerührte Suspension werden nun 9,86 kg Kaliumchlorid unter Stickstoffatmosphäre zugegeben. Bei der Zugabe ist gegebenenfalls eine leichte Wärmetönung zu erkennen. Nach Zugabe wird auf 90°C aufgeheizt und 2 Stunden weiter gerührt. Danach wird auf Raumtemperatur abgekühlt.

Über den Bodenablass wird der Reaktorinhalt auf den mit 1,5 kg Celatom® (Filterhilfsmittel) befüllten Filter abgelassen. Die Ausbeute liegt zwischen 83 % und 90 % für das reine Kaliumtetraethylaluminat. Alle Arbeiten sind unter N₂ Atmosphäre durchzuführen.

## Patentansprüche

1. Verfahren zur Herstellung von Alkalitetraalkylaluminat, **dadurch gekennzeichnet, dass** zu einer Lösung von Alkaliethanolat in Kohlenwasserstoffen Trialkylaluminium zudosiert wird, wobei Alkalitetraalkylaluminat gebildet wird.

2. Verfahren gemäß Anspruch 1, **dadurch gekennzeichnet, dass** als Alkaliethanolat Natriumethanolat verwendet wird.

3. Verfahren gemäß Anspruch 1 oder 2, **dadurch gekennzeichnet, dass** als Trialkylaluminium Triethylaluminium verwendet wird.

4. Verfahren gemäß einem der Ansprüche 1 bis 3, **dadurch gekennzeichnet, dass** als Kohlenwasserstoff Heptan, Toluol oder Mischungen davon verwendet werden.

5. Verfahren gemäß einem der Ansprüche 1 bis 4, **dadurch gekennzeichnet, dass** in einem zusätzlichen Schritt das gebildete Alkalitetraalkylaluminat mit Alkalihalogenid zu einem kationausgetauschten Alkalitetraalkylaluminat umgesetzt wird.

6. Verfahren gemäß Anspruch 5, **dadurch gekennzeichnet, dass** als Alkalihalogenid Kaliumchlorid verwendet wird.

7. Verfahren gemäß Anspruch 5 oder 6, **dadurch gekennzeichnet, dass** das kationausgetauschte Alkalitetraalkylaluminat Kaliumtetraalkylaluminat, bevorzugt Kaliumtetraethylaluminat, ist.

8. Verfahren gemäß einem der Ansprüche 5 bis 7, **dadurch gekennzeichnet, dass** der zusätzliche Schritt in einem Kohlenwasserstoff, bevorzugt Toluol oder Xylol, bei 50 - 100 °C durchgerührt wird.

9. Kaliumtetraalkylaluminat, hergestellt nach einem Verfahren gemäß einem der Ansprüche 5-8.

10. Verwendung von Kaliumtetraalkylaluminat gemäß Anspruch 9 zur galvanischen Aluminium- oder Magnesiumabscheidung auf metallischen Substraten.

11. Verwendung gemäß Anspruch 10, **dadurch gekennzeichnet, dass** das Kaliumtetraalkylaluminat, bevorzugt Kaliumtetraethylaluminat, in einer Formulierung mit Toluol und Trialkylaluminium, bevorzugt Triethylaluminium, verwendet wird.
